# EUROPEAN PATENT APPLICATION

(11) **EP 2 272 703 A1**
(43) Date of publication of application: **12.01.2011**
(21) Application number: 10250955.1
(22) Date of filing: 20.05.2010
(51) Int. Cl.: B60K 11/04, B60K 11/08, B62D 49/06

(54) **Agricultural tractor cooling package**

(30) Priority: 30.06.2009 GB 0911287
(71) Applicant: Agco SA, 60026 Beauvais (FR)
(72) Inventor: Husson, Geoffroy, 54134 Ceintrey (FR); Dupire, Pierre, 59440 Doulers (FR)
(74) Representative: Morrall, Roger

(57) **Abstract**

An agricultural tractor (10) comprises a cooling package (22) disposed in front of an engine (20) and under a hood (14) forward of a cab (12). The cooling package (22) comprises a cooler having a major surface into which air enters. The cooling package (22) and hood (14) is inclined so that the major surface slopes upwardly in the rearward direction. The hood (14) comprises an air inlet grille (36) in the upper surface to provide an upstream air inlet for the cooling package (22), thereby significantly improving the airflow dynamics.

## Description

The invention relates to cooling packages for agricultural tractors which comprise at least one heat exchanger for the cooling of various functions on the tractor such as oil cooling, engine cooling and air conditioning.

Agricultural tractors typically comprise an engine located in front of a driver's cab within an engine space which is covered by a hood or bonnet. Together with the engine, the hood covers a number of other components including air filters, exhaust treatment apparatus, electrical components and a cooling package. The latter often comprises at least one of an engine coolant radiator, an air conditioning condenser and a oil cooler which are often arranged together in banks of coolers arranged adjacent one another so as to share a common air stream directed there through. A fan is often associated with the cooling package and serves to either draw or propel the air stream through the coolers, the air stream being sourced through a grill in the front of the hood and expelled rearwardly towards the engine.

The hood, being located directly in front of the cab, inherently limits the field of view for the driver. Attempts have been made to change the profile of the hood so as to improve the field of vision, such changes including sloping the upper surface of the hood downwardly towards the front. However, the resulting reduction in volume under the hood is limited by the need to incorporate essential components there under.

United Kingdom patent application publication GB-2,336,662 discloses an agricultural tractor having an arrangement of several cooling radiators, one of which is inclined so that the major surface slopes upwardly in the rearward direction whereas the other radiators are disposed at different angles thereto. United States patent application publication US-2006/0103127 discloses a tractor unit of a heavy good vehicle. The tractor unit includes an inclined radiator disposed under a sloping hood.

Agricultural tractor engines often run at their thermal limits for sustained periods of time in dusty environments. Any disruption to the airflow can have detrimental effects on the cooling capability of the cooling package. Both of the aforementioned prior art systems suffer from inferior airflow because sloping of the radiator reduces the incident air flow directed thereupon by motion forces.

It thus an object of the invention to provide an agricultural tractor with improved forward vision for the driver whilst maintaining optimum efficiency of the cooling package.

It is another object of the invention to provide a cooling package for an agricultural tractor with improved airflow dynamics.

According to the invention there is provided an agricultural tractor comprising a cooling package disposed in front of an engine and under a hood forward of a cab, the cooling package comprising a cooler having a major surface, wherein the hood and the cooling package are inclined so that the major surface slopes upwardly in the rearward direction, **characterised in that** the hood comprises an air inlet grille in the upper surface to provide an upstream air inlet for the cooling package.

Advantageously, by inclining the cooling package rearwardly, the height requirement in the front region under the hood is reduced thereby allowing the profile of the hood to be lowered and thus improving the driver's forward vision. By providing an inlet grill in the upwardly facing surface of the hood the reclined cooling package can receive an improved source of cool air, thereby significantly improving the airflow dynamics. The grill is preferably formed in a front region of the hood and preferably aligns with the inclined cooling package covered thereby.

It should be recognised that the term 'major surface' is intended to mean the large heat exchanging surface of a traditional cooler which receives the air stream.

In a preferred arrangement, the cooling package further comprises a fan unit for drawing air through the cooler, the fan unit comprising a fan shroud attached to the cooler and a fan which rotates on an axis which is substantially perpendicular to the cooler.

The cooling package may comprise at least one of an engine coolant radiator, an air conditioning condenser and an oil cooler.

Preferably the major surface is inclined to the horizontal at an angle within the range of 10 to 30 degrees and more preferably within the range of 15 to 25 degrees.

In a preferred arrangement the engine and cooling package are mounted upon a frame member which serves partly to channel the expelled air from the cooling package towards the engine. Advantageously, the upwardly facing surface provided by the frame member can be exploited to channel the expelled air towards the outside surfaces of the engine to provide a subsidiary cooling function. Alternatively, air be expelled downwardly through a hole in the frame.

Further advantages of the invention will become apparent from the following description of a specific embodiment with reference to the appended drawings in which:-
- Figure 1: is a perspective view of a tractor in accordance with the invention;
- Figure 2: is a perspective view of the tractor of Figure 1 shown with the hood removed;
- Figure 3: is a side view of the tractor of Figure 1 shown with the hood removed;
- Figure 4: is a side view of the tractor of Figure 1 shown with the front wheels removed;
- Figure 5: is a perspective view of part of the tractor of Figure 1 including the cooling package engine installation, front axle and chassis;
- Figure 6: is a side view of part of a tractor shown in Figure 5, and
- Figure 7: is a side view of part of a tractor shown in Figure 6 showing the cooling package in an exploded view.

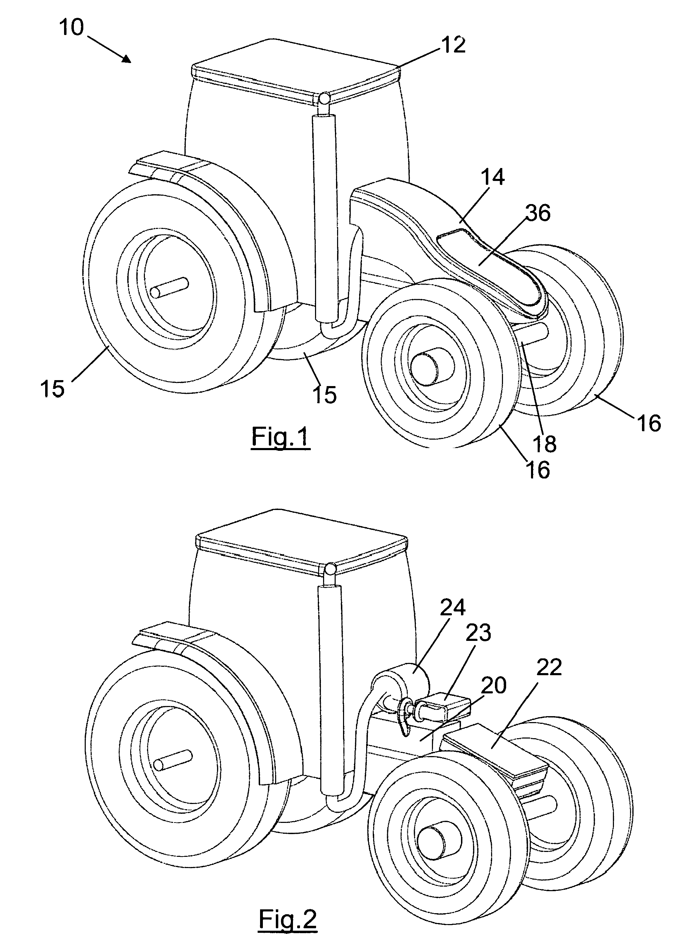

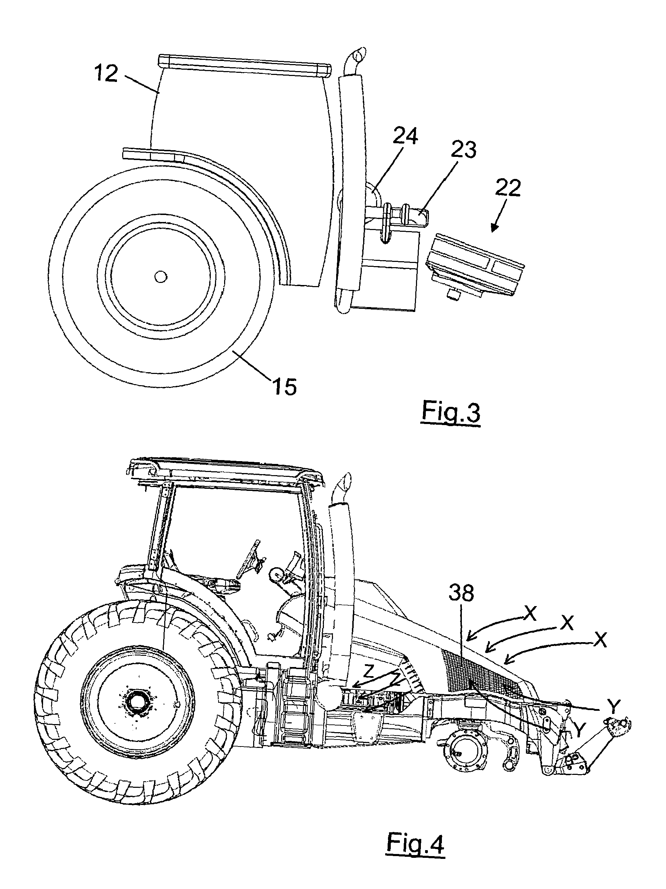

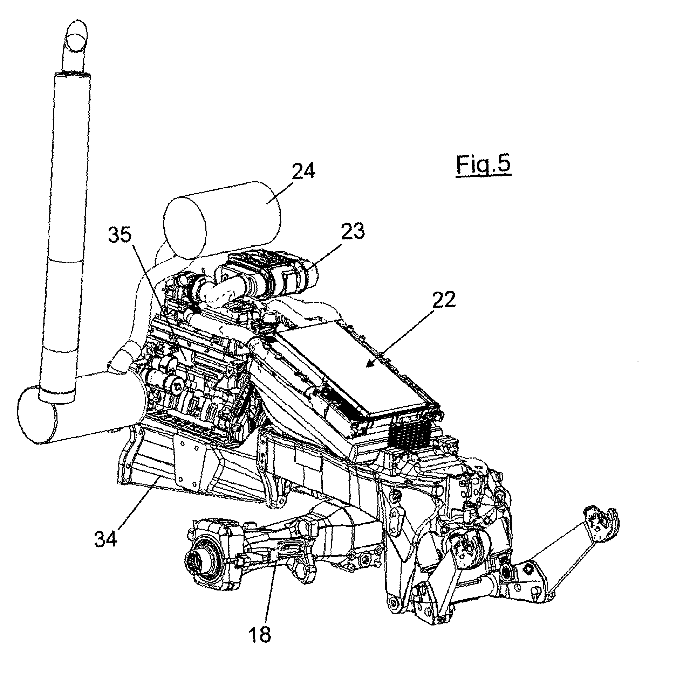

Referring to Figure 1, a tractor 10 comprises a driver's cab 12, a hood 14, rear wheels 15 and steerable front wheels 16 mounted on respective ends of a front axle 18. The hood 14 encloses a volume which houses an engine 20, a cooling package 22, an air intake filter 23 and an exhaust filter 24 as shown in Figures 2 and 3. The engine 20 is located directly in front of the cab 12 as in known tractor installations. The cooling package 22 is located in front of the engine 20 and will be described in more detail with reference to Figures 5, 6 and 7.

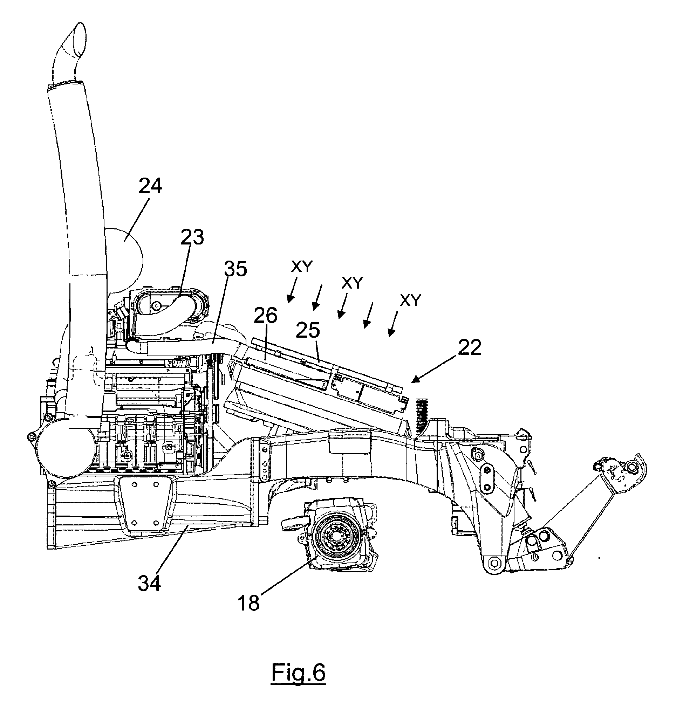

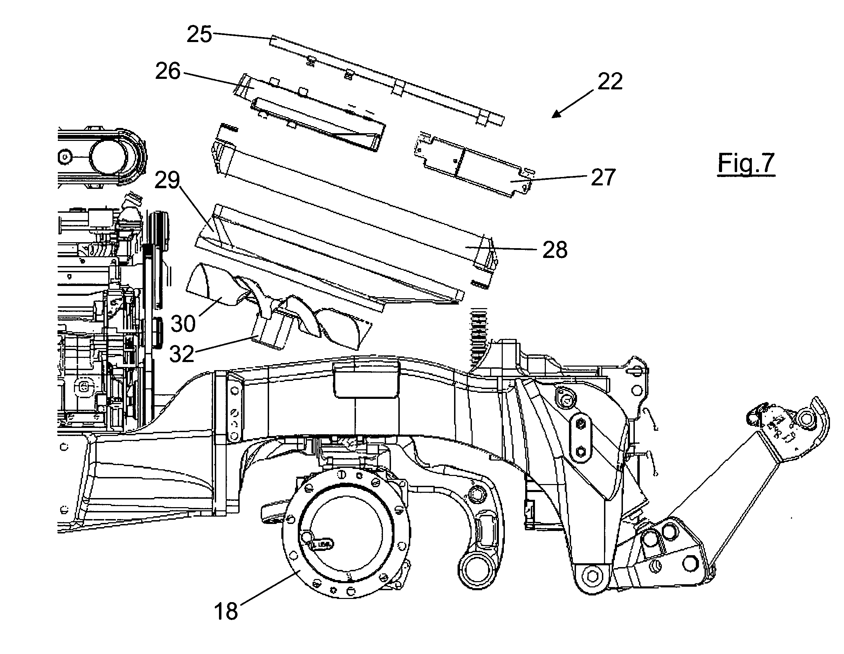

The cooling package 22 comprises a stack of coolers each having a major surface through which an air stream passes. The stack, with reference to Figure 7 in particular, includes an air conditioning condenser 25, an intercooler 26, an oil cooler 27 and a water cooler 28, the latter serving to cool the engine coolant. Attached to the downstream side of the water cooler 28, a fan shroud 29 directs the air flow through a fan 30 which is driven by a motor 32. The coolers are stacked together in close proximity, as shown in Figure 6, providing a cooling package 22 which has a major surface which is inclined to the horizontal by 19 degrees. The various coolers are secured in position with suitable brackets and bolts wherein the entire package 22 is fixed in position relative to tractor frame 34. Pipe work, including pipe 35 which connects from the intercooler 26 to the engine 20, is conveniently aligned with no significant kinks due to the reclined arrangement of the cooling package 22. Advantageously, the pipe 35 can connect to one end of the intercooler 26 thereby delivering a less cumbersome arrangement.

With reference to Figures 1 and 4, cool air is drawn in through a grill 36 formed in the upwardly facing surface of hood 14 and as indicated by arrows X. Furthermore, air is drawn in through side grills 38 located in a front region of side panels of hood 14 as represented by arrows Y. Advantageously, the path of the cool air entering through the top grill 36 passes directly onto the major inlet surface of the cooling package 22 without any significant change in direction and thus resistance. The cool air incident on the major surface of cooling package 22 is represented by arrows XY in Figure 6.

The cool air is drawn through the coolers 25,26,27,28 of the cooling package 22 and expelled by fan 30 before being channelled generally by the frame structure 34 towards the engine 20 and out into the environment on either side of the engine 20, as represented by arrows Z in Figure 4. The air expelled by the fan also serves to cool the engine 20 as it is blown over the exterior surface thereof.

By sloping the cooling package rearwardly as shown, the front region of the hood 14 can be lowered thereby improving the visibility of the driver.

The fan motor 32 is controlled electronically by the tractor electronic control unit (ECU - not shown) which drives the fan at the desired speed which may, or may not, depend upon the instantaneous operating conditions. Dust and chaff which accumulate on the upper grill 36 can be simply ejected by temporarily operating the fan 30 in reverse thereby reversing the air stream and propelling the dust and chaff upwardly. Such an operation may be automatically controlled by the ECU and/or upon command by the driver.

Although the above-described fan 30 sucks in air through the coolers under normal conditions, it is envisaged that the airflow may operate in the reverse direction without deviating from the scope of the invention.

From reading the present disclosure, other modification will be apparent to persons skilled in the art. Such modifications may involve other features which are already known in the field of tractor cooling packages and component parts therefore and which may be used instead of or in addition to features already described herein.

## Claims

1. An agricultural tractor (10) comprising a cooling package (22) disposed in front of an engine (20) and under a hood (14) forward of a cab (12), the cooling package comprising a cooler (28) having a major surface, wherein the hood and the cooling package are inclined so that the major surface slopes upwardly in the rearward direction, **characterised in that** the hood comprises an air inlet grille (36) in the upper surface to provide an upstream air inlet for the cooling package.

2. A tractor according to Claim 1, wherein the cooling package further comprises a fan unit for drawing air through the cooler, the fan unit comprising a fan shroud (29) attached to the cooler and a fan (30) which rotates on an axis which is substantially perpendicular to the cooler.

3. A tractor according to Claim 1 or 2, wherein the cooling package comprises at least one of a engine coolant radiator (28), an air conditioning condenser (25) and an oil cooler (27).

4. A tractor according to any preceding claim, wherein the major surface is inclined to the horizontal at an angle within the range of 10 to 30 degrees.

5. A tractor according to Claim 4, wherein the major surface is inclined to the horizontal at an angle within the range of 15 to 25 degrees.

6. A tractor according to any preceding claim, wherein the engine and cooling package are mounted upon a frame member(34), which serves partly to channel the expelled air from the cooling package towards the engine.
